# FASCICULE DE BREVET EUROPEEN

(11) **EP 0 514 242 B1**
(45) Date de publication et mention de la délivrance du brevet: **15.11.1995**
(21) Numéro de dépôt: 92401257.8
(22) Date de dépôt: 05.05.1992
(51) Int. Cl.: B64F 1/12

(54) **Dispositif d'amarrage et d'aide à la manutention pour hélicoptères**
Ankersystem und Behandlungsvorrichtung für Hubschrauber
Mooring device and handling device for helicopter

(30) Priorité: 13.05.1991 FR 9105734
(43) Date de publication de la demande: 19.11.1992
(73) Titulaire: ETAT FRANCAIS Représenté par le délégué général pour l'armement, F-00460 Armées (FR)
(72) Inventeur: David, Bernard, F-16600 Magnac/Touvre (FR); Amiand, Vincent, F-16000 Angoulême (FR); Conchondon, Claude, F-16000 Angoulême (FR)

(56) Documents cités:
- WO-A-90/13480
- FR-A- 2 462 341
- GB-A- 2 075 931
- US-A- 4 319 722

## Description

L'invention concerne un dispositif d'amarrage et d'aide à la manutention pour appareils à sustentation par rotor, tels qu'un hélicoptère, munis d'un dispositif d'arrimage à harpon.

On entend par dispositif d'arrimage à harpon un dispositif utilisé lors de l'atterrissage ou du décollage, dans lequel un harpon transporté par l'hélicoptère s'engage et s'accroche dans une grille d'appontage fixée sur l'aire d'atterrissage. Le harpon est habituellement commandé hydrauliquement et fournit une force de retenue pour plaquer l'hélicoptère sur l'aire d'atterrissage.

Une fois que l'hélicoptère a atterri, il reste le problème de le déplacer pour l'amener par exemple dans un hangar. Lors de mauvaises conditions atmosphériques, et dans le cas du pont d'envol d'un navire, l'aire de manutention oscille et il faut s'assurer que l'hélicoptère est maintenu solidement au pont lors de sa manutention vers le hangar ou zone de stockage. On a alors intérêt à augmenter au maximum l'adhérence au sol des roulettes de l'hélicoptère en exerçant sur l'hélicoptère une force dirigée vers le bas.

Divers dispositifs ont été proposés pour déplacer un hélicoptère sur le pont d'un navire, par exemple le dispositif décrit dans le brevet FR 2 462 341 qui comporte une piste sur le pont et un trolley mobile situé sur la piste, et se caractérisé en ce que le trolley comporte une sonde qui peut sortir et rentrer verticalement et dont l'extrémité supérieure vient se placer dans des moyens d'engagement au dessous du fuselage de l'hélicoptère. Ce dispositif présente toutefois l'inconvénient de nécessiter le montage de moyens d'engagement de la sonde sous le fuselage de l'hélicoptère, et le dispositif de commande et de blocage de la sonde met en oeuvre un dispositif hydraulique complexe. D'autre part, lors de l'appontage, le harpon s'est engagé dans une grille fixée sur le pont, si bien qu'il faut le désengager de cette grille avant de le fixer éventuellement sur une structure prévue sur le trolley. Ces opérations délicates doivent être menées avec précision, et sont particulièrement dangereuses lors de mauvaises conditions atmosphériques.

On connaît également un chariot de manutention muni d'un bras de préhension qui vient s'appliquer sous l'hélicoptère pour le plaquer au sol pendant la manutention.

Dans la demande internationale de brevet n° 90/13480 il est décrit un harpon qui peut coopérer avec une grille d'appontage montée sur un cadre, cadre qui circule sur des rails parallèles, fixés à l'aire d'envol et de manutention, au moyen d'un dispositif de traction motorisé. La grille d'appontage peut être déplacée perpendiculairement à cette direction de circulation à l'intérieur du cadre par l'intermédiaire d'une douille filetée coopérant avec une tige filetée actionnée par un dispositif motorisé. L'utilisation d'une motorisation pour le déplacement de la grille d'appontage dans son cadre présente l'inconvénient de nécessiter lors de la manutention une synchronisation parfaite entre le déplacement de la grille dans son cadre et celui du cadre lui-même sur les rails parallèles.

Il est à remarquer que pour réduire les efforts de traction de l'hélicoptère durant sa manutention et parce que le volume des hangars est défini au plus juste, il est nécessaire que l'hélicoptère se recentre durant la phase de rentrée vers le hangar. Il convient alors de veiller à ce que les mouvements transversaux de centrage de l'hélicoptère soient amortis car pouvant être à tout moment amplifiés par un coup de roulis. Il convient également de bloquer les mouvements transversaux s'opposant au centrage de l'hélicoptère.

Le but de l'invention est de proposer un dispositif d'arrimage et d'aide à la manutention pour hélicoptère muni d'un harpon, qui permette l'engagement du harpon lors de l'appontage et utilise le harpon ainsi engage pour plaquer l'hélicoptère sur le pont pendant sa manutention, tout en permettant le centrage de l'hélicoptère sur la piste de roulement.

L'invention atteint son but grâce à un dispositif d'amarrage et d'aide à la manutention pour hélicoptère muni d'un harpon coopérant avec une grille d'appontage montée sur un chariot par l'intermédiaire de moyens de montage autorisant une translation de la grille perpendiculairement à la direction de roulement du chariot sur une piste posée ou encastrée sur une aire d'envol et de manutention caractérisé en ce que les moyens de montage de la grille sur le chariot comportent une structure support de la grille, montée librement de façon coulissante, sur des rails de guidage parallèles supportés par le chariot.

Selon une variante de réalisation, la structure support de la grille coulisse librement, pour permettre le centrage de l'hélicoptère sur la piste de roulement, au moyen de galets, sur des rails parallèles de guidage vertical et horizontal supportés par le chariot.

Des moyens d'amortissement ou de blocage du mouvement relatif de la grille par rapport au chariot peuvent être prévus.

Les moyens d'amortissement ou de blocage du mouvement relatif de la grille par rapport au chariot peuvent comporter un couple de vérins hydrauliques montés tête-bêche parallèlement à la direction de déplacement relatif de la grille par rapport au chariot et disposés de chaque côté de la grille.

D'autres caractéristiques et avantages apparaissent à la lecture de la description détaillée qui va suivre et à l'examen des dessins annexés qui illustrent, à titre non limitatif, un exemple de réalisation de l'invention.

La figure 1 est une vue schématique de coté du dispositif selon un mode de réalisation de l'invention.

Les figures 2 et 3 sont des vues schématiques montrant le positionnement relatif de l'hélicoptère par rapport au dispositif avant et après centrage du harpon sur la piste de roulement du chariot.

La figure 4 est une vue de dessus du dispositif selon une direction perpendiculaire au pont d'envol.

La figure 5 est une vue partielle des moyens de guidage de la grille sur le chariot et des moyens de guidage du chariot sur sa piste de roulement sur le pont d'envol.

La figure 6 est un schéma d'un dispositif hydraulique d'amortissement ou de blocage du mouvement relatif de la grille par rapport au chariot.

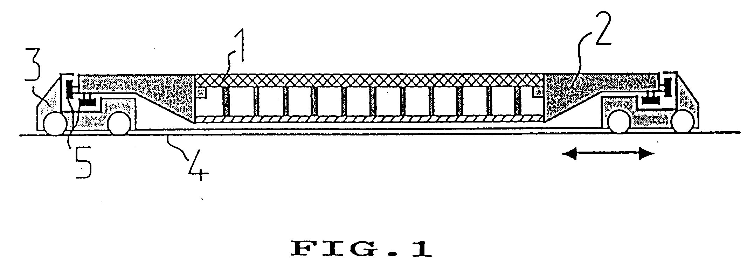

Sur la figure 1, on a représenté schématiquement, vu de côté, le dispositif d'arrimage et d'aide à la manutention selon un mode de réalisation préférentiel.

Le dispositif comporte une grille d'appontage 1 munie de moyens de montage 2 sur un chariot 3 circulant sur des rails posés ou encastrés sur le pont d'envol 4 d'un navire et s'étendant du lieu d'appontage au hangar ou zone de stockage.

Les moyens de montage 2 comportent un ensemble 5 de galets de guidage coulissant sur des rails montés parallèles et supportés par le chariot 3.

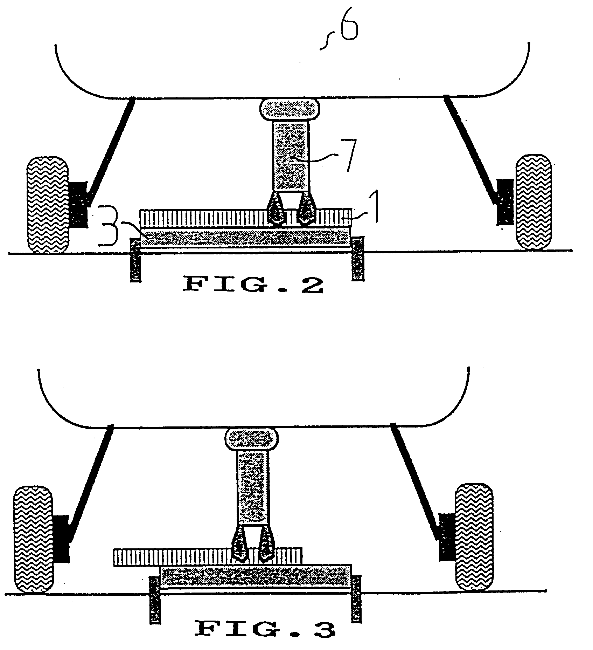

Les figures 2 et 3 représentent le positionnement relatif d'un hélicoptère 6 muni d'un harpon 7 par rapport au chariot 3, respectivement avant et après centrage de la grille 1. Le harpon 7 porté par l'hélicoptère 6 est engagé dans des moyens d'engagement portés par la grille et préférentiellement constitués par une structure en nid d'abeille.

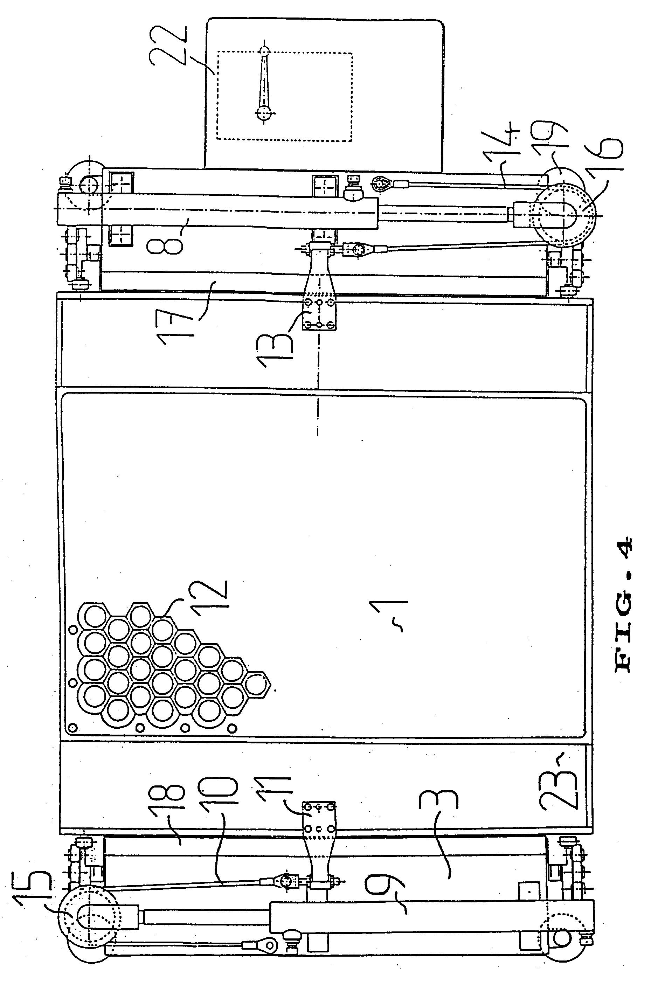

La figure 4 est une vue de dessus du dispositif, qui montre la grille 1 présentant une structure interne en nid d'abeille 12 et montée sur une structure support 23.

Un couple de vérins hydrauliques 9,8 montés tête-bêche et disposés parallèlement à des rails de guidage 17,18, permet le déplacement libre transversal amorti ou le blocage de la grille. Les vérins 9,8 agissent respectivement sur des poulies 15,16 de guidage des câbles 10 et 14 attachés par une extrémité au chariot 3 et par l'autre extrémité à des semelles 11 et 13 fixées au milieu des deux côtés de la stucture support 23 parallèles à l'axe des vérins.

Un caisson d'attache 22 comporte des moyens de fixation non représentés du chariot à un dispositif tracteur pour le déplacement du chariot grille sans l'hélicoptère.

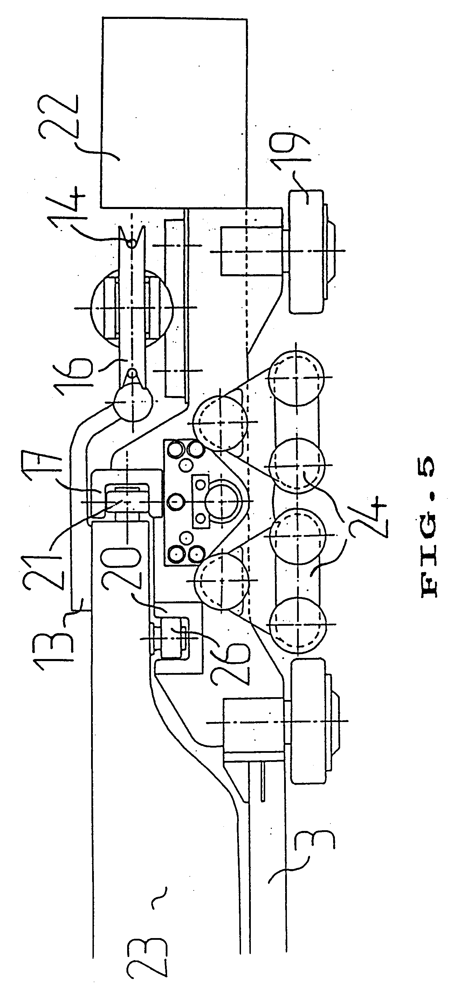

La figure 5 illustre partiellement les moyens de guidage de la grille sur le chariot et les moyens de guidage du chariot sur le pont d'envol. On voit des galets tels que celui désigné par la référence 26 assurant le guidage horizontal de la structure 23 sur un rail 20 supporté par le chariot 3, et des galets tels que celui désigné sous la référence 21 assurant le guidage vertical de la structure 23 sur un rail 17.

Le guidage du chariot sur le pont se fait par des bogies 24 qui assurent le guidage vertical du chariot dans une piste comportant des rails présentant une structure en "T" inversé pour opposer une réaction à la force dirigée vers le bas appliquée à l'hélicoptère. Ces rails peuvent être posés ou encastrés sur le pont d'envol. Des galets tels que celui désigné par la référence 19 assurent le guidage horizontal du chariot dans ces rails.

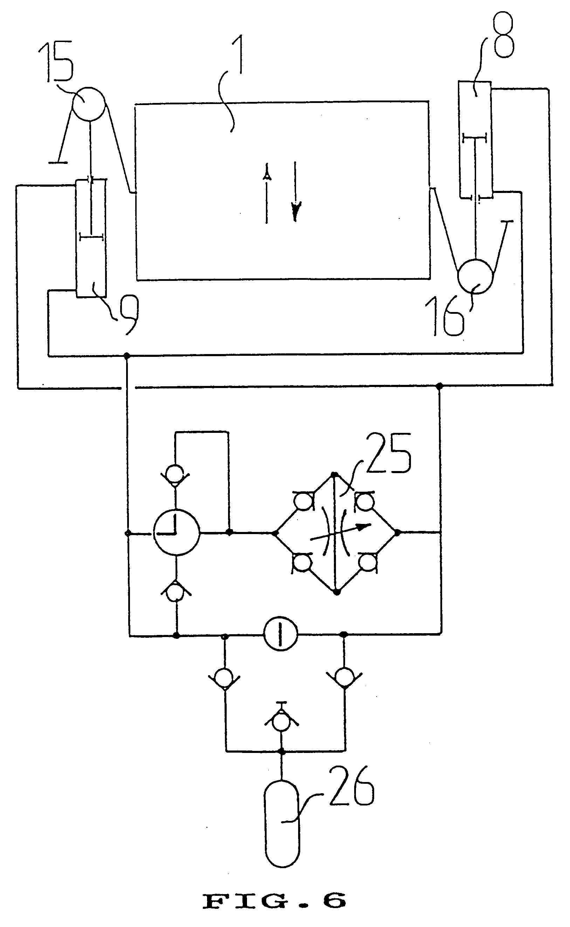

La figure 6 représente un exemple de schéma d'un dispositif de commande hydraulique du dispositif selon l'invention, montrant un élément amortisseur 25 et un réservoir de fluide hydraulique 26.

La séquence de fonctionnement du dispositif d'amarrage et d'aide à la manutention pour hélicoptères munis d'un harpon est la suivante:
Lors de l'atterrissage, le dispositif d'amarrage et d'aide à la manutention est amené au point d'atterrissage par un dispositif tracteur non représenté. Ensuite des moyens installés au point d'atterrisage viennent immobiliser le chariot; ces moyens peuvent comporter un doigt escamotable sortant du pont pour venir se loger dans un moyen d'engagement situé sous la grille 1. Le dispositif ainsi immobilisé est alors prêt à être utilisé comme grille d'appontage par l'hélicoptère dont le harpon vient s'engager dans les moyens d'engagement prévus sur la grille. Le positionnement précis du harpon de l'hélicoptère sur la grille n'est pas nécessaire puisque la grille pourra se déplacer librement transversalement par rapport au chariot pour centrer le harpon sur la piste lors du roulement de l'hélicoptère sur le pont d'envol.

Il suffit alors d'accrocher un dispositif tracteur à l'avant de l'hélicoptère, de libérer par rétraction du doigt escamotable le chariot du point d'atterrissage, et d'entraîner l'hélicoptère et le chariot vers le hangar ou la zone de stockage, le dispositif tracteur pouvant avantageusement être le même pour le chariot 3 et l'hélicoptère 6.

Le harpon 7 reste engagé dans la grille et sert de moyen de plaquage au sol de l'hélicoptère durant la manutention, améliorant ainsi l'adhérance des roulettes de l'hélicoptère.

Le centrage de l'hélicoptère se fait alors de lui-même lors du roulement, un peu comme une caravane s'aligne avec son véhicule tracteur lorsque celui-ci avance. Cela ne pourrait être obtenu si la structure support (23) de la grille (1) était montée, non pas librement mais par l'intermédiaire d'une motorisation, de façon coulissante sur les rails de guidage parallèles supportés par le chariot (3). Le dispositif de centrage et d'amortissement du déplacement latéral de la grille par rapport au chariot bloque tout mouvement de l'hélicoptère contraire au centrage, et amortit les mouvements de centrage pouvant être amplifiés par un mouvement de roulis.

Pour l'envol, on effectue les opérations dans l'ordre inverse depuis le hangar ou zone de stockage.

## Revendications

1. Dispositif d'amarrage et d'aide à la manutention pour hélicoptère (6) muni d'un harpon (7) coopérant avec une grille d'appontage (1) montée sur un chariot (3) par l'intermédiaire de moyens de montage autorisant une translation de la grille (1) perpendiculairement à la direction de roulement du chariot (3) sur une piste posée ou encastrée sur une aire d'envol et de manutention (4) caractérisé en ce que les moyens de montage de la grille (1) sur le chariot (3) comportent une structure support (23) de la grille (1), montée librement de façon coulissante, sur des rails de guidage parallèles supportés par le chariot (3).

2. Dispositif d'amarrage et d'aide à la manutention selon la revendication 1, caractérisé en ce que la structure support (23) de la grille (1) coulisse librement, au moyen de galets (21, 26), sur des rails parallèles de guidage vertical et horizontal supportés par le chariot (3).

3. Dispositif d'amarrage et d'aide à la manutention selon la revendication 1, caractérisé en ce qu'il comporte des moyens d'amortissement ou de blocage du mouvement relatif de la grille (1) par rapport au chariot (3).

4. Dispositif d'amarrage et d'aide et à la manutention selon la revendication 3, caractérisé en ce que les moyens d'amortissement ou de blocage du mouvement relatif de la grille (1) par rapport au chariot (3) comportent un couple de vérins hydrauliques montés tête-bêche parallèlement à la direction de déplacement relatif de la grille (1) par rapport au chariot (3) et disposés de chaque côté de la grille (1).

## Claims

1. An anchoring and handling assistance device for a helicopter 6 fitted with a harpoon 7 linked to a landing grid 1 mounted on a car 3 through mounting means allowing a translation of grid 1, perpendicular to the rolling direction of the car 3 on a runway put or embedded in a take-off and handling area 4, characterised in that the mounting means of the grid 1 on car 3 comprise a supporting structure 23 of grid 1, mounted freely in order to slide on parallel guiding rails supported by car 3.

2. An anchoring and handling assistance device according to claim 1, characterised in that the supporting structure 23 of grid 1 slides freely by means of rollers 21, 26 on parallel rails of vertical and horizontal guiding, supported by car 3.

3. An anchoring and handling assistance device according to claim 1, characterised in that it comprises means of dampening and blocking of the relative displacement of grid 1, in relation to car 3.

4. An anchoring and handling assistance device according to claim 4, characterised in that the means of damping and blocking of the relative displacement of grid 1, in relation to car 3, comprise a pair of hydraulic jackscrews mounted head to tail parallel to the direction of relative displacement of grid 1 in relation to car 3, and installed on both sides of grid 1.

## Patentansprüche

1. Befestigungs- und Beförderungshilfsvorrichtung für Hubschrauber (6) mit einem Gabelanker (7) in Zusammenarbeit mit einem Landungsrost (1), der auf einem Wagen (3) mit Montagevorrichtungenbefestigt ist, die eine Translationsbewegung des Rostes (1) senkrecht zur Rollrichtung des Wagens (3) auf einer Piste ermöglichen, die auf einer Start- und Beförderungsbahn ruht oder eingelassen ist, dergestalt, daß die Montagevorrichtungen des Rostes (1) auf dem Wagen (3) eine Stützstruktur (23) des Rostes (1) umfassen, der frei gleitend auf parallelen Führungsschienen montiert ist, die durch den Wagen (3) getragen werden.

2. Befestigungs- und Beförderungshilfsvorrichtung entsprechend Patentanspruch 1, dergestalt daß die Stützstruktur (23) des Rostes (1) frei gleitet, mittels Rollen (21, 26) auf parallelen Schienen zur vertikalen und horizontalen Führung, die von dem Wagen (3) getragen werden.

3. Befestigungs- und Beförderungshilfsvorrichtung entsprechend Patentanspruch 1, dergestalt, daß sie Vorrichtungen zur Dämpfung oder Blockierung der relativen Bewegung des Rostes (1) im Verhältnis zum Wagen (3) umfaßt.

4. Befestigungs- und Beförderungshilfsvorrichtung entsprechend Patentanspruch 3, dergestalt, daß die Vorrichtungen zur Dämpfung oder Blockierung der relativen Bewegung des Rostes (1) im Verhältnis zum Wagen (3) ein Paar Hydraulikwinden umfassen, die Kopf bei Fuß parallel zur relativen Bewegungsrichtung des Rostes (1) im Verhältnis zum Wagen (3) montiert und auf jeder Seite des Rostes (1) angeordnet sind.
